# EUROPEAN PATENT APPLICATION

(11) **EP 4 764 994 A1**
(43) Date of publication of application: **24.06.2026**
(21) Application number: 25224956.0
(22) Date of filing: 18.12.2025
(51) Int. Cl.: G06Q 20/20, G07F 7/08, G07F 7/10, G07F 19/00

(54) **METHOD FOR PROTECTING A PAYMENT TERMINAL AGAINST SKIMMING DEVICES**

(30) Priority: 19.12.2024 CA 3260081
(71) Applicant: Ingencio, Canada, Mississauga, ON L4W 5L9 (CA)
(72) Inventor: BOWLES, Steven, Ashton (CA); BURGESS, Wayne, Waterdown (CA); JUNG, Alvin, Toronto (CA); DAOUD, Rafid, North York (CA)
(74) Representative: Germain Maureau

(57) **Abstract**

The present disclosure relates to a method for detecting a skimming device in a point of sale, POS, the method comprising: a plurality of successive scanning cycles each comprising scanning for emitters using a wireless communication protocol to receive emitter identifiers; generating and updating a list of detected emitters comprising for each currently detected emitter an emitter identifier and a first detection time; for each of the currently detected emitters in the detected emitter list, comparing an active time threshold with an active time of the currently detected emitter from the first detection time of the currently detected emitter, and/or comparing the identifier of the currently detected emitter with identifiers in a whitelist of authorized identifiers; and when a currently detected emitter has an active time exceeding the active time threshold and an identifier not belonging to the whitelist, activating an alert signal.

## Description

### TECHNICAL FIELD

The present invention relates to the field of security of payment transactions and payment terminals.

### BACKGROUND

Recently, the retail store environments meet a growing security problem related to credit card skimming devices. Skimming devices are typically small battery operated devices that utilize card readers and/or cameras to capture payment card data (e.g., financial card number, expiration date, etc.) and personal identification number (PIN) data entered by consumers. Some skimming devices are designed to be installed by criminals on a payment terminal and to capture payment card information of customers as they swipe or insert their payment card in the payment terminal to conduct a payment transaction with the store. Some skimming devices have a keypad intended to overlay the keypad of the payment terminal to capture the pin codes typed by the customers.

The skimming devices can be further configured to directly transmit the captured data to a terminal of the criminal via a wireless transmission. Some skimming devices can store the captured data to transmit them later when a wireless transmission link is established between the skimming device and the criminal terminal. Generally, the wireless transmission link used by the skimming devices is of the type Bluetooth^{®} or BLE which has low power requirements.

Other skimming devices are adapted to conduct skimming attacks on other devices having a payment card reader such as automated teller machines, fuel pumps, vending machines, etc.

To address this security problem, the store administrators must use a handheld communication device with a Bluetooth^{®} interface, such as a smartphone to sniff for signals from these illegal skimming devices in the store. However, when a large number of Bluetooth terminals are in the radio range of the communication device of the store administrator, e.g. when many customers are present in the store with a smartphone having its Bluetooth interface activated, it may be difficult and time consuming to detect the presence of a skimming device. In addition, this process is prone to errors and may leave large periods of time where a skimming device can stay active in the store.

Thus, there is a need for accurately detecting skimming devices.

### SUMMARY

The present disclosure is related to a method for detecting a skimming device in a point of sale, POS, the method comprising: a plurality of successive scanning cycles each comprising scanning, by a detecting device, for emitters using a wireless communication protocol in a radio range of the detecting device, to receive identifiers of detected emitters; generating and updating, by the detecting device, a list of detected emitters comprising for each currently detected emitter an emitter identifier and a first detection time of the detected emitter; for each of the currently detected emitters in the list of detected emitters, comparing an active time threshold with an active time of the currently detected emitter, the active time extending from the first detection time of the currently detected emitter to a current time, and/or comparing the identifier of the currently detected emitter with identifiers in a whitelist of authorized identifiers; and when a currently detected emitter in the list of detected emitters has an active time exceeding the active time threshold and an identifier not belonging to the whitelist, activating an alert signal.

Thanks to the use of a double filtering on the basis of an active time and using a whitelist of authorized identifiers, a skimming device installed in a POS, such an overlay skimming device installed on a payment terminal can be more accurately detected. In this manner, the administrator of the POS has not to search for an emitter identifier in a list that can comprise many identifiers for example when a great number of customers are present in the vicinity of the POS.

According to an embodiment, the method further comprises: comparing the identifier of one or more of the currently detected emitters in the list of detected emitters with identifiers in a blacklist of reported identifiers of skimming devices; and emitting an alert signal when an identifier of a currently detected emitter in the list of detected emitters is in the blacklist.

In this manner, the detecting device can detect a skimming device which activates its communication interface when the POS is closed to transmit captured data from customer payments cards.

According to an embodiment, the activation of the alert signal triggers a stop of the transactions performed in the POS.

In this manner, when a skimmer device is potentially present in the POS, all transactions are stopped preventing more payment card data to be captured by such a skimming device.

According to an embodiment, the wireless communication protocol is Bluetooth, BLE and/or Wi-Fi.

According to an embodiment, the emitter identifiers in the list of detected emitters comprise for each currently detected emitters MAC addresses.

According to an embodiment, the active time threshold is set to a value between 10 and 20 minutes.

Embodiments may also relate to a detection device for detecting a skimming device in a point of sale, POS, the detection device comprising: a computing unit, and a communication interface connected to the computing unit, the computing unit being configured to implement the method as above-defined, using the communication interface.

Embodiments may also relate to a computer program product comprising a computer readable memory storing computer executable instructions thereon that, when executed by a computer processor, cause the computer processor to perform the detection method as above-defined.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is a schematic perspective top view of a conventional payment terminal with a skimming device;
Figure 2 is a block diagram of a point-of-sale POS protected by a detection device, according to an embodiment;
Figure 3 is a flow chart showing steps of a method for detecting skimming devices implemented by the detection device, according to an embodiment;
Figure 4 is a block diagram of the detection device, according to an embodiment.

### DETAILED DESCRIPTION

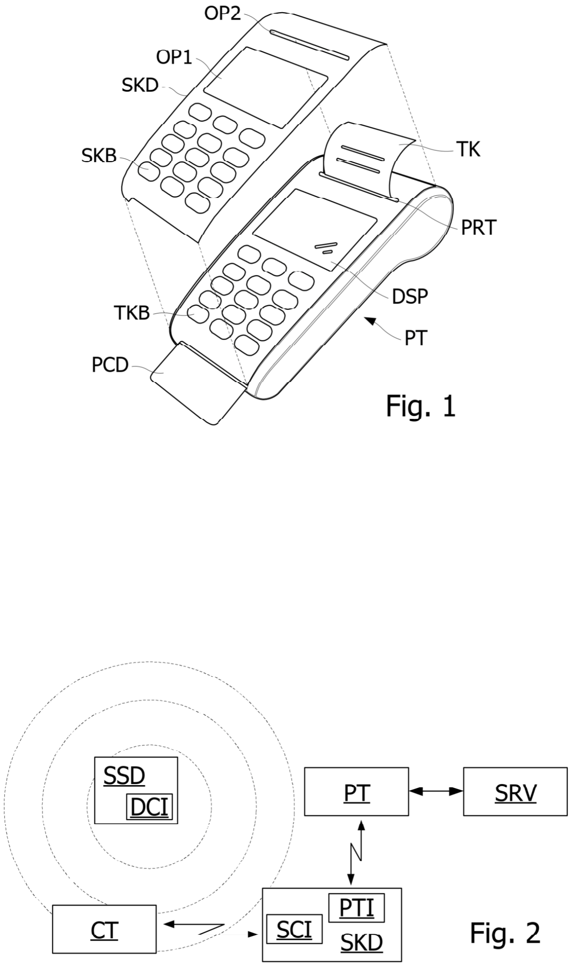

Figure 1 shows a payment terminal PT comprising a keyboard TKB, a display screen DSP, a printer PRT for printing a paper tape TK and a payment card reader housed in the casing of the terminal for reading payment cards PCD such as credit and debit cards. A skimming device SKD may be installed on the payment terminal PT. The skimming device SKD may have the form of the top part of the casing housing the payment terminal PT. In such a case, the skimming device SKD comprises a keyboard SKB and openings OP1, OP2 to leave the display screen DSP visible and for the passage of the paper tape TK from the printer PRT. The skimming device SKD is configured to capture data from the payment card PCD inserted into the payment terminal PT and data such as PIN codes entered using the keyboard SKB.

Figure 2 shows a POS protected by a detection device, according to an embodiment. The POS comprises a payment terminal PT like the one of Figure 1. The payment terminal PT is connected to a server SRV to transmit transaction data generated when a payment card is inserted into the payment terminal. Figure 2 further shows a skimming device SKD comprising a terminal interface PTI to capture data from payment cards inserted into the payment terminal PT and a communication interface SCI to wirelessly transmit the captured data to a terminal CT of a criminal.

According to an embodiment, the POS is equipped with a skimming device detector SSD comprising a communication interface DCI and configured to sniff the wireless communications occurring in the POS.

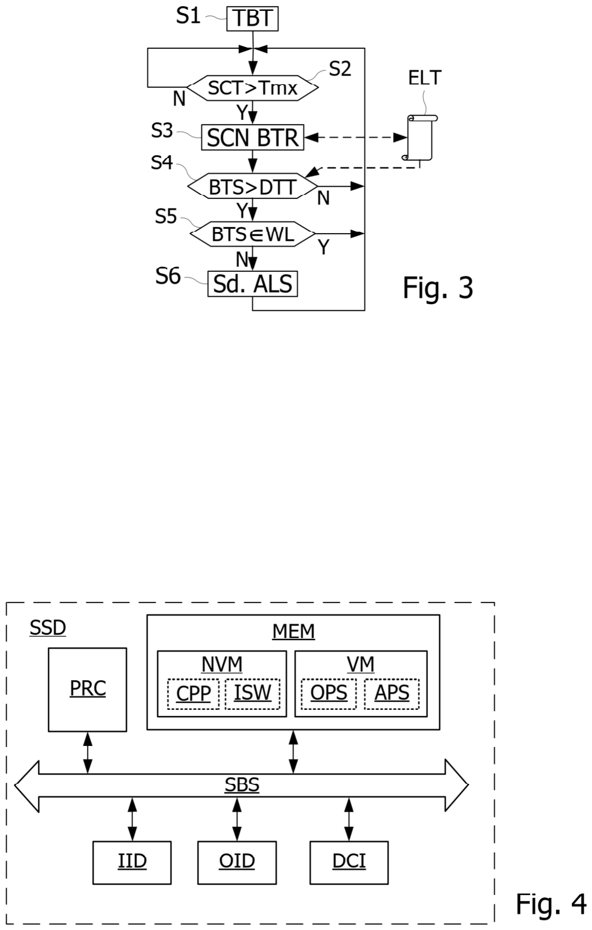

Figure 3 shows steps S1 to S6 of a method for detecting skimming devices implemented by the detector SSD, according to an embodiment. At step S1, the detector SSD runs a boot procedure. Then the detector SSD successively performs a detection procedure from steps S2 to S4. In step S2, the detector SSD waits for the end of a timer Tmx defining a scan cycle. In step S3, the detector SSD scans for emitters using a wireless communication protocol potentially used by known skimming devices in the radio range of the detector. In step S3, the detector can generate a list ELT of the detected emitters BTR for the current scanning cycle. This list ELT may comprise a time of detection corresponding to the time of the scanning cycle or the current time, an emitter identifier and a MAC (Media Access Control) address. In subsequent executions of step S3 (or scanning cycles), the list ELT can be updated to add the identifiers of the newly detected emitters BTR with the current time for the detection time, and to add a last time of detection corresponding to the current time or the time of the scanning cycle for the emitters BTR of the list that are no longer detected. The emitters BTR of the list ELT that are no longer detected can also be removed from the list.

In step S4, the detector SSD reads the list ELT updated at the step S3 and computes a detection duration BTS of each of the currently detected emitters that are still detected, the detection duration being equal to the time elapsed from the detection time to the current time. Then, the detector SSD compares each of the computed detection durations with a duration threshold DTT. Typically, the duration threshold DTT is set to a value corresponding to a maximum time during which a customer stays in in the vicinity of the POS. According to an embodiment, the duration threshold DTT is set to a value between 10 and 20 minutes, e.g. 20 minutes.

If none of the currently detected emitters BTR has a detection duration greater than the threshold DTT, the detector SSD continues to carry out the detection procedure from step S2, otherwise it carries out step S5. In step S5, the detector SSD reads the list ELT and a whitelist WL of authorized emitter identifiers. The whitelist can comprise for example identifiers of the payment terminal and smartphones of employees of the POS. If all the detected emitters in the list ELT, having a detection duration greater than the threshold WL have an identifier belonging to the whitelist WL, the detector SSD continues to carry out the detection procedure from step S2, otherwise it carries out step S6. Step S5 can be performed before step S4.

In step S6, the detector SSD activate and/or send an alert signal ALS for example to the server SRV or the payment terminal PT and/or to an administrator of the POS. At the reception of the alert signal ALS, the payment terminal PT or the server SRV can stop the transactions and the administrator of the POS is warned that a skimming device may be present in the POS. After step S6, the detector SSD continues to carry out the procedure from step S2.

The communication protocol used by the detector SSD to detect emitters in the radio range of the detector can be Bluetooth^{®}, BLE and/or Wi-Fi.

According to an embodiment, step S5 includes a comparison of the detected emitter identifiers in the list ELT with identifiers in a blacklist, and if one of the detected emitter identifiers in the list ELT is also in the blacklist, the detector SSD carries out step S6. Such a blacklist can comprise reported identifiers typically used by skimming devices.

According to an embodiment, step S4 is not carried out when the POS is not open to customers, to activate an alert signal when an unknown emitter identifier is detected.

Figure 4 shows the detection device SSD, according to an embodiment. The detection device SSD can be adapted to execute instructions from a computer-readable medium to perform these and/or any of the functions or processing described herein. The detection device SSD may comprise at least one computing device or electronic device capable of including firmware, hardware, and/or executing software instructions to implement the functionality described herein. The detection device SSD may include a processor device PRC (may also be referred to as a control unit), a memory MEM, and a system bus SBS. The detection device SSD may include at least one computing device having the processor device PRC. The system bus SBS provides an interface for system components including, but not limited to, the memory MEM and the processor device PRC. The processor device PRC may include any number of hardware components for conducting data or signal processing or for executing computer code stored in memory MEM. The processor device PRC (e.g., control unit) may, for example, include a generalpurpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus SBS may be any of several types of bus structures that may further interconnect to a memory bus (with or without a memory controller), a peripheral bus, and/or a local bus using any of a variety of bus architectures. The memory MEM may be one or more devices for storing data and/or computer code for completing or facilitating methods described herein. The memory MEM may be communicably connected to the processor device PRC (e.g., via a circuit or any other wired, wireless, or network connection) and may include computer code for executing one or more processes described herein. The memory MEM may include non-volatile memory NVM (e.g., read-only memory (ROM), erasable programmable read-only memory (EPROM), electrically erasable programmable read-only memory (EEPROM), etc.), and volatile memory VM (e.g., random-access memory (RAM)), or any other medium which can be used to carry or store desired program code in the form of machine-executable instructions or data structures and which can be accessed by a computer or other machine with a processor device PRC. A basic input/output system (BIOS) ISW may be stored in the non-volatile memory NVM and can include the basic routines that help to transfer information between elements within the detection device SSD.

All or a portion of the examples disclosed herein may be implemented as a computer program product CPP stored on a transitory or non-transitory computer-usable or computer-readable storage medium (e.g., single medium or multiple media), such as the non-volatile memory NVM, which includes complex programming instructions (e.g., complex computer-readable program code) to cause the processor device PRC to carry out the steps S1-S6 described herein. Thus, the computer-readable program code can comprise software instructions for implementing the functionality of the examples described herein when executed by the processor device PRC. The processor device PRC may serve as a controller or control system for the detection device SSD that is to implement the functionality described herein.

The detection device SSD also may include an input device interface IID (e.g., input device interface and/or output device interface). The input device interface IID may be configured to receive input and selections to be communicated to the detection device SSD when executing instructions, such as from a keyboard, mouse, touch-sensitive surface, etc. Such input devices may be connected to the processor device PRC through the input device interface IID coupled to the system bus. The detection device SSD may include an output device interface OID configured to forward output, such as to a display, a video display unit (e.g., a liquid crystal display, LCD). The detection device SSD also includes a communication interface DCI suitable for sniffing emitters according to one or more communication protocols potentially used by known skimming devices in the radio range of the detector. The communication interface DCI may further be configured to communicate with other devices in the POS, such as the payment terminal PT, the server SRV, and/or a smartphone of an administrator of the POS, using an appropriate network.

In one implementation example, the detection device SSD is a smartphone running a dedicated application carrying out the steps S1 to S6.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art.

In this respect, it is apparent to those of ordinary skills in the related art that the scanning cycles are not necessarily performed periodically, but can be triggered for example by external events such as closure of the POS or the turning off the payment terminal. In addition, the alert signal can be taken into account only by an employee or administrator of the POS, who can then turn off the payment terminal and proceed with a search for a skimming device in the POS. In addition, other communication protocols can be implemented by the detection device as a function of the evolution of the known skimming device features.

## Claims

1. A method for detecting a skimming device in a point of sale, POS, the method comprising:
a plurality of successive scanning cycles each comprising scanning, by a detecting device, for emitters using a wireless communication protocol in a radio range of the detecting device, to receive identifiers of detected emitters;
generating and updating, by the detecting device, a list of detected emitters comprising for each currently detected emitter an emitter identifier and a first detection time of the detected emitter;
for each of the currently detected emitters in the list of detected emitters, comparing an active time threshold with an active time of the currently detected emitter, the active time extending from the first detection time of the currently detected emitter to a current time, and/or comparing the identifier of the currently detected emitter with identifiers in a whitelist of authorized identifiers; and
when a currently detected emitter in the list of detected emitters has an active time exceeding the active time threshold and an identifier not belonging to the whitelist, activating an alert signal.

2. The method of claim 1, further comprising:
comparing the identifier of one or more of the currently detected emitters in the list of detected emitters with identifiers in a blacklist of reported identifiers of skimming devices; and
emitting an alert signal when an identifier of a currently detected emitter in the list of detected emitters is in the blacklist.

3. The method according to any of claims 1 and 2, wherein the activation of the alert signal triggers a stop of the transactions performed in the POS.

4. The method according to any one of claims 1 to 3, wherein the wireless communication protocol is Bluetooth, BLE and/or Wi-Fi.

5. The method according to any one of claims 1 to 4, wherein the emitter identifiers in the list of detected emitters comprise for each currently detected emitters MAC addresses.

6. The method according to any one of claims 1 to 5, wherein the active time threshold is set to a value between 10 and 20 minutes.

7. A detection device for detecting a skimming device in a point of sale, POS, the detection device comprising:
a computing unit, and
a communication interface connected to the computing unit, the computing unit being configured to implement the method of any one of claims 1 to 6, using the communication interface.

8. A computer program product comprising a computer readable memory storing computer executable instructions thereon that, when executed by a computer processor, cause the computer processor to perform the detection method according to any one of claims 1 to 6.
